# EUROPÄISCHE PATENTSCHRIFT

(11) **EP 1 202 040 B1**
(45) Veröffentlichungstag und Bekanntmachung des Hinweises auf die Patenterteilung: **14.03.2007**
(21) Anmeldenummer: 01123673.4
(22) Anmeldetag: 02.10.2001
(51) Int. Cl.: G01M 13/02

(54) **Verfahren und Vorrichtung für den Einlauf- und Funktionstest von Synchrosystemen**
Procedure and device for the run-in and functional testing of synchronous systems
Procédé et dispositif d'essai de rodage et du fonctionnement de systèmes synchrones

(30) Priorität: 25.10.2000 DE 10052901
(43) Veröffentlichungstag der Anmeldung: 02.05.2002
(73) Patentinhaber: Hoerbiger Antriebstechnik GmbH, 86956 Schongau (DE)
(72) Erfinder: Schmitt, Thilo, 86956 Schongau (DE)
(74) Vertreter: Hager, Thomas Johannes

(56) Entgegenhaltungen:
- DE-A1- 3 535 103
- DE-A1- 3 609 376
- US-A- 5 038 601

## Beschreibung

Die Erfindung betrifft ein Verfahren und eine Vorrichtung für den Einlauf- und Funktionstest von Synchrosystemen gemäß Anspruch 1 bzw. Anspruch 6.

Um das Einlaufverhalten von Synchrosystemen zu verbessern, damit sich zu Beginn der Nutzungszeit im Getriebe das Reibverhalten möglichst nicht verändert, ist es wünschenswert, die Teile des Synchrosystems einem Einlauf zu unterziehen.

Aus der DE 36 09 376 A1 ist ein Verfahren für das Einsetzen eines Lamellenpakets in das Kupplungsgehäuse einer Flüssigkeitsreibungskupplung bekannt. Dabei werden Montagebolzen verwendet, über die sich die Lamellen zentriert einsetzen lassen. Auf diese Weise soll eine schnelle Montage ohne Verkanten, Verklemmen oder Verbiegen der Lamellen erreicht werden.

Aus dem US-Patent 5,038,601 A ist eine Reibtestmaschine bekannt, bei der Reibscheiben in Eingriff gebracht werden, wozu selektiv betätigbare Fluidkolben verwendet werden.

Aus der DE 35 35 103 A1 ist schließlich eine Vorrichtung zum Messen der für eine Synchronisiereinrichtung in Schaltgetrieben relevanten Größen bekannt, mit der die sogenannte "Synchronisier-Kapazität" ermittelbar ist.

Es ist daher Aufgabe der vorliegenden Erfindung, ein Verfahren sowie eine Vorrichtung für den Einlauf- und Funktionstest von Synchrosystemen zu schaffen.

Die Lösung dieser Aufgabe erfolgt durch die Merkmale des Anspruches 1.

Gemäß dem erfindungsgemäßen Verfahren werden die Einzelteile eines Synchropaketes zunächst vormontiert. Diese Vormontage kann manuell oder automatisch erfolgen.

Daraufhin wird das vormontierte Synchropaket in einer Einlauf- und Drehmomentmeßstation angeordnet. In dieser wird das Paket von einem Meßkopf automatisch erfaßt, letztendlich ineinander geführt und mit einer Nenndrehzahl in beide Drehrichtungen unter Last gedreht und anschließend ohne Last zum Lösen des Paketes gedreht. Während der beiden Läufe unter Last wird über einen Sensor das aufgebrachte Drehmoment gemessen und ausgewertet.

Danach wird die Pakethöhe des Synchropaketes erfaßt und dieses entnommen.

Somit wird erfindungsgemäß ein vorzugsweise vollautomatisiertes Verfahren geschaffen, mit dem eine Drehmomentüberwachung zur Prozeßsicherung möglich ist. Ferner ist es mit diesem Verfahren möglich, von einer statistischen Prozeßüberwachung des Paketmaßes, das die Höhe des Synchropaketes darstellt, auf eine hundertprozentige Kontrolle dieses Maßes umzustellen.

Die Unteransprüche 2-5 haben vorteilhafte Weiterbildungen des erfindungsgemäßen Verfahrens zum Inhalt.

In den Ansprüchen 6-11 ist die erfindungsgemäße Vorrichtung definiert.

Weitere Einzelheiten, Merkmale und Vorteile der Erfindung ergeben sich aus nachfolgender Beschreibung eines Ausführungsbeispiels anhand der Zeichnungen.

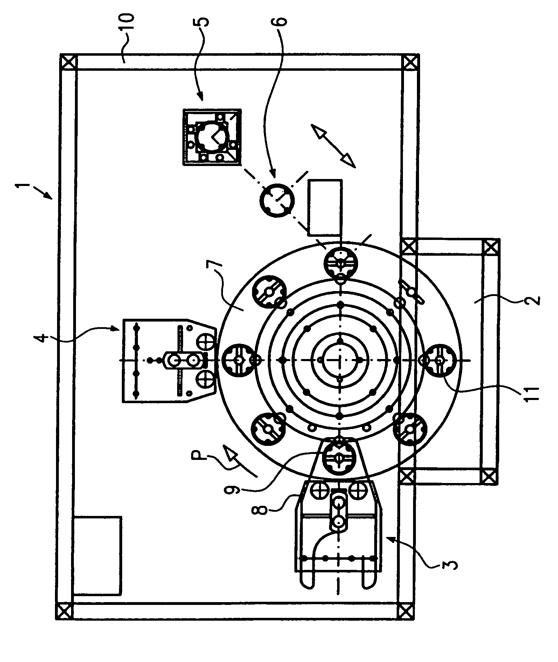

Die stark vereinfachte einzige Figur der Zeichnung zeigt eine Draufsicht auf eine erfindungsgemäße Vorrichtung für den Einlauf- und Funktionstest von Synchrosystemen.

Demgemäß weist die Vorrichtung 1 eine Montagestation 2, eine Einlauf- und Drehmomentmeßstation 3 und eine Paketmaß-Meßstation 4 auf.

Die Stationen 2-4 sind auf einem Rahmen 10 angeordnet, in dem ein drehbarer Aufnahmetisch 7 gelagert ist. Der Aufnahmetisch 7 weist eine Mehrzahl von Haltebereichen 11 auf, auf denen das Synchropaket zum Durchführen des Einlauf- und Funktionstestes plazierbar ist.

Der Aufnahmetisch 7 dreht sich in Pfeilrichtung P und befördert somit die in der Montagestation 2 zumindestens vormontierten Synchropakete zunächst in die Einlauf- und Drehmomentmeßstation 3, danach zur Paket-Meßstation 4 und anschließend zu einer Entnahmestelle, die eine Gutteilablagestation 5 und eine Schlechtteilablagestation 6 umfaßt.

Die Montagestation 2, die Einlauf- und Drehmomentmeßstation 3 sowie die Paketmeßstation 4 und die Gutteilablagestation 5 sowie die Schlechtteilablagestation 6 sind somit entlang des Außenumfanges des Aufnahmetisches 7 in der genannten Reihenfolge angeordnet.

Die Einlauf- und Drehmomentmeßstation 3 weist eine schematisch stark vereinfachte Meßeinrichtung 8 zur Erfassung des Synchropaketes auf, die üblicherweise einen Sensor umfaßt, der das aufgebrachte Drehmoment mißt und auswertet.

Ferner ist diese Station 3 mit einem ebenfalls nur schematisch angedeuteten Drehantrieb 9 für das Synchropaket versehen, mit dem es möglich ist, das Synchropaket mit einer Nenndrehzahl in beide Richtungen unter Last zu drehen.

## Patentansprüche

1. Verfahren für den Einlauf- und Funktionstest von Synchrosystemen mit folgenden Verfahrensschritten:
- Vormontieren der Einzelteile eines Synchropaketes;
- Anordnen des Synchropaketes in einer Einlauf- und Drehmmomentmeßstation und Messen des aufgebrachten Drehmomentes während zweier Testläufe;
- Erfassen der Pakethöhe des Synchropaketes, und
- Entnehmen des Synchropakets.

2. Verfahren nach Einspruch 1, **dadurch gekennzeichnet, daß** vor der Drehmomentmessung die Teile des Synchropaketes ineinander geführt, mit Nenndrehzahl in beide Richtungen unter Last gedreht und anschließend ohne Last zum Lösen des Pakets gedreht werden.

3. Verfahren nach Anspruch 1 oder 2, **dadurch gekennzeichnet, daß** entsprechend dem Ergebnis der Messung des aufgebrachten Drehmoments und der Erfassung der Pakethöhe beim Entnehmen des Synchropaktes die Schlechtteile aussortiert und die Gutteile zum Verpacken transportiert werden.

4. Verfahren nach einem der Ansprüche 1-3, **dadurch gekennzeichnet, daß** die Einzelteile manuell vormontiert werden.

5. Verfahren nach einem der Ansprüche 1-3, **dadurch gekennzeichnet, daß** die Einzelteile automatisch vormontiert werden.

6. Vorrichtung (1) für den Einlauf- und Funktionstest von Synchrosystemen
- mit einer Montagestation (2);
- mit einer Einlauf- und Drehmomentmeßstation (3);
- mit einer Paketmaß-Meßstation (4);

7. Vorrichtung nach Anspruch 6, **gekennzeichnet durch** eine Gutteilablagestation (5).

8. Vorrichtung nach Anspruch 6 oder 7, **gekennzeichnet durch** eine Schlechtteilablagestation (6).

9. Vorrichtung nach einem der Ansprüche 6 bis 8, **dadurch gekennzeichnet, daß** die Montagestation (2), die Einlauf- und Drehmomentmeßstation (3) und die Paketmaß-Meßstation (4) um einen drehbaren Aufnahmetisch (7) für die Synchropakete herum angeordnet sind.

10. Vorrichtung nach einem der Ansprüche 6 bis 9, **dadurch gekennzeichnet, daß** die Einlauf- und Drehmomentmeßstation (3) eine Meßeinrichtung (8) zur Erfassung der Pakethöhe des Synchropaketes aufweist.

11. Vorrichtung nach einem der Ansprüche 6 bis 10, **dadurch gekennzeichnet, daß** die Einlauf- und Drehmomentmeßstation (3) einen Drehantrieb (9) für das Synchropaket aufweist.

## Claims

1. Procedure for the run-in and functional testing of synchronous systems, comprising the following steps:
- preassembling the individual parts of a synchronous packet;
- arranging the synchronous packet in a run-in and torque-measuring station and measuring the applied torque during two test runs;
- detecting the height of the synchronous packet, and
- removing the synchronous packet.

2. Procedure according to claim 1, **characterised in that**, before the torque is measured, the parts of the synchronous packet are fitted together, rotated under load in both directions at a nominal speed and then rotated without load in order to release the packet.

3. Procedure according to claim 1 or claim 2, **characterised in that**, depending on the result of the measurement of the applied torque and the detection of the packet height, when the synchronous packet is removed, bad parts are rejected and good parts are transported for packaging.

4. Procedure according to one of claims 1-3, **characterised in that** the individual parts are preassembled manually.

5. Procedure according to one of claims 1-3, **characterised in that** the individual parts are preassembled automatically.

6. Device (1) for the run-in and functional testing of synchronous systems, comprising
an assembly station (2);
a run-in and torque-measuring station (3), and
a packet-measuring station (4).

7. Device according to claim 6, **characterised by** a receiving station (5) for good parts.

8. Device according to claim 6 or claim 7, **characterised by** a receiving station (6) for bad parts.

9. Device according to one of claims 6 to 8, **characterised in that** the assembly station (2), the run-in and torque-measuring station (3) and the packet-measuring station (4) are arranged around a rotatable mounting table (7) for the synchronous packets.

10. Device according to one of claims 6 to 9, **characterised in that** the run-in and torque-measuring station (3) has a measuring device (8) for detecting the height of the synchronous packet.

11. Device according to one of claims 6 to 10, **characterised in that** the run-in and torque-measuring station (3) has a rotary actuator (9) for the synchronous packet.

## Revendications

1. Procédé pour le test de rodage et de fonctionnement de système synchrones comprenant les états de procédé suivantes :
- prémontage des différentes pièces d'un paquet synchrone ;
- disposition du paquet synchrone dans une station de mesure d'entrée et une station de mesure de couple et mesure du couple appliqué pendant deux passages d'essai ;
- enregistrement de la hauteur de paquet du paquet synchrone, et
- prélèvement du paquet synchrone.

2. Procédé selon la revendication 1, **caractérisé en ce que** les pièces du paquet synchrone sont guidées les unes dans les autres avant la mesure du couple, sont tournées sous charge au régime nominal dans les deux sens et sont tournées ensuite sans charge pour le détachement du paquet.

3. Procédé selon la revendication 1 ou 2, **caractérisé en ce que**, en fonction du résultat de la mesure du couple appliqué et de l'enregistrement de la hauteur de paquet lors de l'enlèvement du paquet synchrone, les pièces défectueuses sont éliminées et les pièces bonnes sont transportées pour le conditionnement.

4. Procédé selon l'une quelconque des revendications 1 à 3, **caractérisé en ce que** les différentes pièces sont prémontées manuellement.

5. Procédé selon l'une quelconque des revendications 1 à 3, **caractérisé en ce que** les différentes pièces sont prémontées automatiquement.

6. Dispositif (1) pour le test de rodage et de fonctionnement de systèmes synchrones :
- avec une station de montage (2) ;
- avec une station de mesure d'entrée et une station de mesure de couple (3) ;
- avec une station de mesure de cote de paquet (4).

7. Dispositif selon la revendication 6, **caractérisé par** une station de dépose de pièces bonnes (5).

8. Dispositif selon la revendication 6 ou 7, **caractérisé par** une station de dépose de pièces mauvaises (6).

9. Dispositif selon l'une quelconque des revendications 6 à 8, **caractérisé en ce que** la station de montage (2), la station de mesure d'entrée et de mesure de couple (3) et la station de mesure de cote de paquet (4) sont disposées autour d'une table de réception (7) rotative pour les paquets synchrones.

10. Dispositif selon l'une quelconque des revendications 6 à 9, **caractérisé en ce que** la station de mesure d'entrée et de mesure de couple (3) présente un dispositif de mesure (8) pour l'enregistrement de la hauteur de paquet du paquet synchrone.

11. Dispositif selon l'une quelconque des revendications 6 à 10, **caractérisé en ce que** la station de mesure d'entrée et de mesure de couple (3) présente un entraînement de rotation (9) pour le paquet synchrone.
